# FASCICULE DE BREVET EUROPEEN

(11) **EP 1 002 308 B1**
(45) Date de publication et mention de la délivrance du brevet: **09.10.2002**
(21) Numéro de dépôt: 98942660.6
(22) Date de dépôt: 30.07.1998
(51) Int. Cl.: G08G 1/0969, G01C 21/20

(54) **SYSTEME DE NAVIGATION AUTOMOBILE**
NAVIGATIONSANLAGE FÜR KRAFTFAHRZEUGE
MOTOR VEHICLE NAVIGATION SYSTEM

(30) Priorité: 12.08.1997 FR 9710294
(43) Date de publication de la demande: 24.05.2000
(73) Titulaire: Siemens VDO Automotive S.A.S., 31036 Toulouse cedex 01 (FR)
(72) Inventeur: POURNAIN, Michel, F-31490 Leguevin (FR); LOPEZ, Robert, F-31300 Toulouse (FR); CROS, Gilles, F-31490 Leguevin (FR)
(74) Mandataire: Berg, Peter
(86) Numéro de dépôt international: EP9804774
(87) Numéro de publication internationale: WO99008250

(56) Documents cités:
- EP-A- 0 534 533
- DE-A- 3 905 493
- US-A- 5 544 060

## Description

La présente invention concerne un procédé et un système de navigation automobile. Plus particulièrement le système selon l'invention est destiné à l'aide au déplacement d'un véhicule dans une zone géographique déterminée.

Il est déjà connu des systèmes de navigation permettant à un conducteur de se diriger dans une zone déterminée. Ces systèmes affichent sur un écran les manoeuvres significatives à réaliser pour atteindre un but fixé par le conducteur. En général, de tels systèmes fonctionnent de la façon suivante :
- le conducteur définit préalablement un but à atteindre,
- le système calcule et établit un itinéraire privilégié pour l'atteindre et
- le système guide le conducteur pas à pas jusqu'à ce que ce but soit atteint.

Le guidage se fait à l'aide de messages vocaux et/ou d'un écran placé sur le tableau de bord du véhicule. De manière classique, l'écran affiche des pictogrammes de direction indiquant au conducteur les manoeuvres significatives qu'il a à reproduire pour atteindre le but fixé.

Le document DE 39 05 493 (BOSCH) décrit un système de navigation affichant sur un écran, embarqué dans le véhicule, une carte routière détaillée. Cependant, cette carte routière est difficile à consulter rapidement lorsqu'une décision de direction est à prendre. Selon ce brevet, le conducteur a alors la possibilité de demander un guidage simplifié. Ce guidage simplifié lui donne une indication de direction du type de celle figurant sur les panneaux de signalisation au lieu de la carte routière détaillée. Un tel guidage simplifié a pour but d'aider le conducteur à prendre rapidement une décision. Cependant, ce guidage ne reflète pas la topographie réelle du lieu puisque l'infrastructure routière est représentée sous un mode symbolique. Ainsi, par exemple si le conducteur doit suivre une route principale tournant à droite, l'affichage simplifié affichera «continuer tout droit», puisqu'il s'agit de poursuivre la route principale. Ceci peut bien sûr induire en erreur le conducteur, ou pour le moins le perturber. Le mode de guidage simplifié selon ce brevet ne permet de résoudre de telles ambiguïtés de direction.

De même, le document US 5 544 060 (ZEXEL) décrit un système de navigation muni d'une fonction de prévisualisation. Un tel système permet en plus de l'affichage classique d'une indication de direction, de demander à tout moment du trajet une visualisation de l'ensemble des indications de direction qui vont être données au conducteur pendant le trajet qu'il doit effectuer. Cette fonction de prévisualisation ne donne cependant pas au conducteur d'information complémentaire lorsqu'il ne comprend pas une indication de direction lui demandant de continuer tout droit (parce qu'il s'agit de poursuivre la route principale) alors que la route devant lui tourne. Un tel système de navigation ne permet pas de lever l'ambiguïté ressentie par le conducteur dans un tel cas de figure.

Or, ce cas de figure (divergence entre une indication donnée par le système de navigation et la configuration réelle des lieux telle que vue par le conducteur) se présente assez fréquemment. En effet, les cartographies disponibles sur le marché à l'heure actuelle sont souvent incomplètes, voire erronées, ceci aussi bien en zone urbaine, qu'en zone rurale. En zone urbaine, les erreurs sont principalement dues à des routes nouvelles non cartographiées, ou à des modifications du plan de circulation. En zone rurale, toutes les routes secondaires ne sont pas cartographiées et les risques d'erreurs sont donc importants. Les indications données par l'écran peuvent parfois induire en erreur le conducteur. Ainsi, comme cela a été précédemment expliqué, lorsque la route principale tourne à droite ou à gauche, le système de navigation représente la direction à suivre par une indication «tout droit ». En effet, pour le système, comme c'est toujours la route principale que l'on suit, c'est la direction «tout droit » qui est à suivre. Si par malchance, dans le virage de la route principale, une route «tout droit » existe, soit non cartographiée, soit de même importance apparente alors qu'elle a été cartographiée avec une importance plus faible, le conducteur risque de suivre la mauvaise direction. De telles erreurs de cartographie et/ou anomalies de guidage sont relativement fréquentes.

Pour pallier ce type de défaut, il est déjà connu, lorsque le conducteur le demande, de faire apparaître sur l'écran du dispositif de navigation, non plus uniquement des pictogrammes de guidage indiquant les changements de direction significatifs à suivre, mais la carte mémorisée de l'endroit où se trouve le véhicule. Cependant, pour que l'écran puisse afficher une telle carte, il doit être d'une taille suffisante et présenter une grande résolution. De ce fait, un tel écran est relativement onéreux. En outre, cette solution présente l'inconvénient majeur de demander au conducteur l'analyse d'une carte alors même qu'il conduit, ce qui peut être préjudiciable à la sécurité ou nécessiter l'arrêt du véhicule toujours pour des questions de sécurité.

La présente invention propose un système de navigation automobile guidant facilement un conducteur lorsqu'il détecte une ambiguïté, ceci sans présenter une carte détaillée à l'écran et sans imposer au conducteur d'avoir à interpréter une telle carte.

A cet effet, la présente invention concerne un système de navigation automobile, du type comportant :
- une unité centrale de calcul de navigation munie d'une mémoire contenant des données topographiques réelles d'une zone déterminée, et
- un dispositif de positionnement du véhicule, l'unité centrale étant associée à un dispositif de guidage vocal et/ou à un écran fonctionnant selon un mode appelé de «guidage normal », dans lequel au moins un pictogramme de direction est affiché sur l'écran pour indiquer les manoeuvres significatives devant être prochainement reproduites par le conducteur, le dit système étant caractérisé en ce qu'il comporte en outre :

- un organe de commande adapté pour faire fonctionner le dispositif de guidage vocal et/ou l'écran selon un mode de guidage temporairement renforcé, dans lequel au moins un message vocal et/ou un pictogramme de direction reproduit la topographie, telle que mémorisée, du lieu pour lequel un guidage renforcé a été demandé, le dit pictogramme de guidage renforcé et/ou le message vocal associé étant obtenu par une modification temporaire du filtrage appliqué aux données topographiques mémorisées.

Un tel système permet donc au conducteur d'avoir sous les yeux une forme simplifiée de la carte représentant la topographie du lieu à l'écran. Sur cette carte, il n'est affiché que des pictogrammes reproduisant la configuration géographique mémorisée de l'infrastructure routière de l'endroit déterminé. Cette configuration géométrique réelle peut éventuellement être légèrement simplifiée, mais pas interprétée. Ainsi, un virage à droite de 15°5 (par exemple) ne sera pas forcément représenté exactement par une flèche à droite inclinée de 15°5, mais le virage à droite sera matérialisé. Par contre, ce même virage à droite ne sera pas interprété comme devant être indiqué par une flèche «tout droit », sous prétexte que c'est la route principale qui tourne à droite.

Ainsi, si une route principale tourne à droite alors que le dispositif de synthèse vocale et l'affichage de guidage normal indique de poursuivre tout droit, le guidage renforcé annonce que la route principale tourne et présente un pictogramme reproduisant la direction de cette route telle qu'elle a été mémorisée. Grâce au guidage renforcé, demandé par le conducteur, l'ambiguïté est levée et le conducteur sait que la route principale tourne, ce qui lui permet de suivre la bonne direction.

Ce guidage renforcé est affiché à l'écran grâce à une modification temporaire du filtrage des données à afficher. Cette modification du filtrage est limitée dans l'espace et/ou dans le temps.

Avantageusement, selon l'invention, l'organe de commande, permettant au conducteur de demander temporairement un guidage renforcé, peut être un bouton - poussoir placé le plus proche possible du conducteur ou être un organe commandé par la voix ou tout autre moyen analogue.

On notera également que le guidage renforcé demandé s'interrompt automatiquement dès que la manoeuvre indiquée par le pictogramme a été réalisée par le véhicule.

L'arrêt du guidage renforcé peut également être automatisé par une temporisation et s'effectuer dès qu'un certain laps de temps s'est écoulé.

La présente invention concerne également un procédé de navigation mettant en oeuvre le dispositif ci-dessus décrit.

D'autres objets, caractéristiques et avantages de la présente invention ressortiront d'ailleurs de la description qui suit à titre d'exemple non limitatif et en référence aux dessins annexés dans lesquels :
- la figure 1 représente de manière schématique un système de navigation selon l'invention,
- les figures 2a et 2b représentent un guidage renforcé selon l'invention dans un premier cas de configuration d'infrastructure routière,
- les figures 3a à 3c représentent un guidage renforcé selon l'invention dans un second cas de configuration d'infrastructure routière.

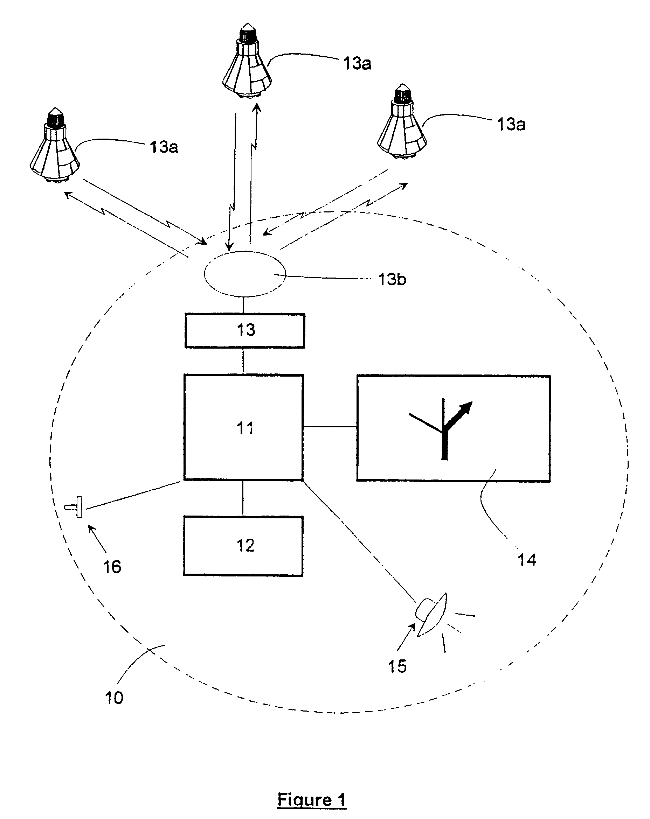

Selon le mode de réalisation représenté à la figure 1, le système de navigation 10, selon l'invention, est embarqué dans un véhicule automobile et est adapté pour fournir une aide au conducteur quant au trajet à suivre pour atteindre un but préalablement fixé.

Ce système de navigation comporte, de manière classique, une unité centrale de calcul 11 reliée à une mémoire topographique 12 contenant les données topographiques d'une zone déterminée. L'unité centrale de calcul 11 est également reliée à un dispositif de positionnement 13 dit GPS (Global Positioning System) associé, de manière classique, à une pluralité de satellites de positionnement 13a. L'unité centrale de calcul 11 est également reliée à un dispositif de synthèse vocale 15 adapté pour émettre un message vocal vers le conducteur. Un écran d'affichage 14, relié également à l'unité centrale, présente à l'écran au moins un pictogramme de direction indiquant les manoeuvres significatives devant être prochainement reproduites par le conducteur. Selon l'invention, ce système de navigation comporte également un organe de commande 16, représenté à la figure 1 sous la forme d'un simple bouton-poussoir, pouvant être actionné par le conducteur et placé à cet effet à proximité de celui-ci.

De manière classique, les satellites 13a envoient, à une antenne 13b du dispositif de positionnement 13, des signaux permettant au dispositif de positionnement 13 et à l'unité centrale de calcul 11 de déterminer les coordonnées du véhicule. Selon le trajet établi par cette unité centrale de calcul, celle-ci affiche alors à l'écran, en fonction de la position déterminée du véhicule, quelles sont les manoeuvres significatives à effectuer prochainement. Par exemple, elle indique au conducteur qu'il aura à tourner à droite dans x mètres, et dans ce cas, le pictogramme représenté à l'écran indique une manoeuvre à droite comme cela est représenté à la figure 1 et le dispositif de synthèse vocale 15, annonce le message correspondant.

Il est à noter que le système de navigation 10 n'annonce et n'affiche que les prochains changements significatifs de direction. Ainsi, en mode de guidage normal, pour éviter que le conducteur soit perturbé par une quantité trop importante d'informations, le système de navigation 10 ne transmet au conducteur que des messages (vocaux et visuels) filtrés. Ce filtrage est fort utile, mais il existe certaines situations où le conducteur peut avoir des problèmes pour suivre l'indication présentée à l'écran ou entendue. Dans ce cas, selon l'invention, le conducteur presse le bouton-poussoir 16 pour provoquer le passage du système de navigation en guidage renforcé. Dans ce cas, l'unité centrale de calcul 11, après comparaison entre le guidage normal et le guidage renforcé, autorise le passage en guidage renforcé lorsqu'il y a une différence entre ces deux guidages. Le guidage renforcé selon l'invention est constitué par une modification temporaire du filtrage appliqué aux données topographiques mémorisées.

On trouvera ci-après deux cas de figure dans lesquels ce guidage renforcé peut être nécessaire.

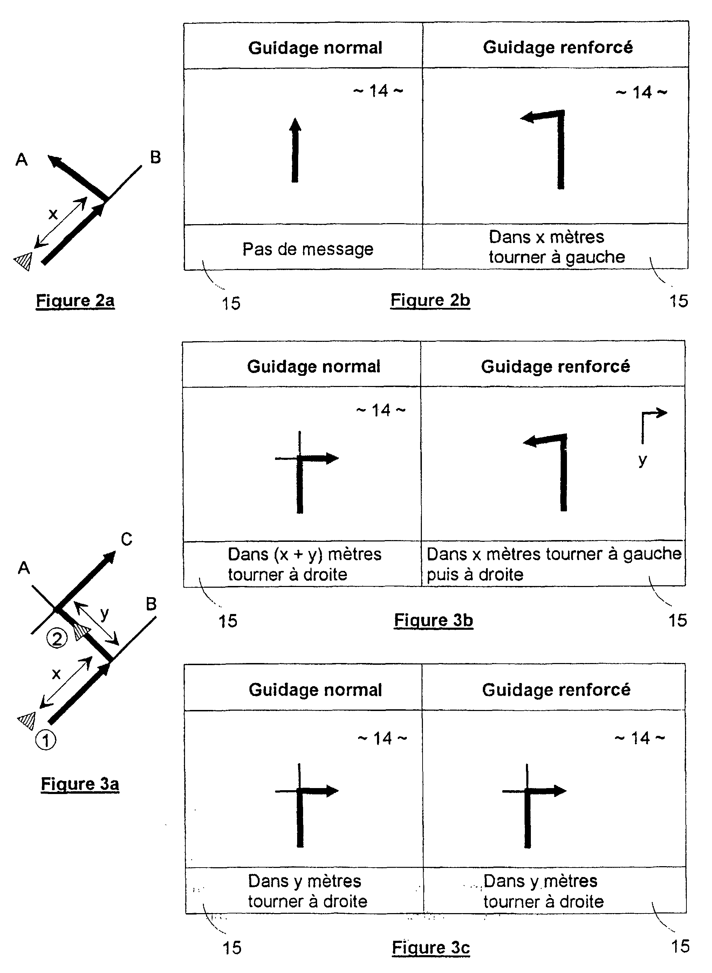

En référence à la figure 2a, le véhicule (matérialisé par un triangle hachuré) doit suivre une route principale A qui, au bout d'une distance de x mètres, tourne sur la gauche. Dans ce virage à gauche, une seconde route référencée B sur la figure 2a croise cette route principale. Cette route B n'a pas été cartographiée (pour des raisons quelconques) et n'existe donc pas dans la cartographie mémorisée.

En mode de guidage normal du véhicule, l'écran 14 indique, comme direction à suivre au conducteur, un pictogramme vertical l'informant tout simplement de continuer «tout droit », c'est-à-dire de continuer sur la route principale. Il n'y a d'ailleurs pas de message vocal associé à ce type de guidage et la synthèse vocale 15 reste muette.

Le conducteur qui, visuellement, arrive à l'intersection des routes A et B détecte une ambiguïté de guidage. Dans ce cas, il presse le bouton-poussoir 16 pour demander le guidage renforcé. L'unité centrale de calcul 11 autorise ce guidage renforcé et présente, comme cela est montré à la figure 2b, un pictogramme indiquant réellement la topographie de la zone dans laquelle le véhicule se trouve, ce pictogramme présentant la direction mémorisée à suivre. En effet, le passage en mode de guidage renforcé a pour effet de modifier le filtrage des informations en provenance de la cartographie mémorisée, et d'autoriser la présentation des informations telles que mémorisées, sans les interpréter.

Comme le montre la figure 2b, le mode de guidage renforcé présente donc un pictogramme tournant à gauche. Dans ce mode de guidage renforcé, la route B n'est pas représentée puisqu'elle n'est pas présente dans la cartographie, mais il est clairement montré que la route A tourne à gauche. Le dispositif de synthèse vocale annonce lui aussi clairement qu'il faudra tourner à gauche dans x mètres, même s'il s'agit en fait de suivre la route principale. Dès que le conducteur a dépassé l'intersection entre la route A et la route B, l'unité centrale de calcul 11 repasse en guidage normal.

On note ainsi que le guidage renforcé permet d'annoncer et de présenter temporairement à l'écran les directions mémorisées à suivre, en se conformant à la topographie du lieu telle que mémorisée, et sans se soucier du fait qu'une route est principale ou non. Le conducteur ainsi informé peut prendre la direction correcte et poursuivre son trajet.

Les figures 3a à 3c présentent un deuxième cas dans lequel le conducteur peut faire appel au guidage renforcé pour être guidé correctement. La figure 3a montre la topographie mémorisée du lieu. Le trajet C que doit suivre le conducteur est matérialisé par les pictogrammes en gras. Dans ce cas particulier, le conducteur doit, à partir d'une position 1 (triangle hachuré référencé 1) suivre une route principale pendant une distance x, ensuite prendre sur la gauche pendant une distance y, et à partir d'une position 2 prendre sur la droite le trajet C. Cependant, entre la distance x et la distance y, il va croiser une route B non cartographiée (ou considérée comme étant en sens interdit), et lors du changement de direction vers la droite pour suivre l'itinéraire C, il va arriver à une intersection entre un trajet A et un trajet C. Dans ces conditions, le guidage normal du véhicule présente, comme cela est montré à la figure 3b, une indication (vocale et visuelle) indiquant que dans une distance x + y, il faudra tourner à droite.

Bien évidemment, le conducteur recevant ce type d'information se rend compte immédiatement que cela ne correspond pas à ce qu'il voit. Dans ce cas, il peut appuyer sur l'organe de commande 16 pour demander le guidage renforcé. Ce guidage renforcé permet, dans un premier temps en ce qui concerne l'intersection du trajet C et de la route B, de matérialiser le fait que la route principale tourne à gauche. Le guidage renforcé présente donc un pictogramme tournant vers la gauche (figure 3b) et la synthèse vocale 15 indique au conducteur que dans x mètres, il devra tourner à gauche, puis à droite vers C.

On notera que l'information visuelle est fournie en deux temps. Dans un premier temps, comme dans l'exemple précédent, la route B n'est pas représentée à l'écran, mais le virage de la route C est matérialisé (figure 3b). En outre, l'indication qu'il faudra, par la suite, tourner à droite, est annoncée et présentée à l'écran par un pictogramme vers la droite avec une indication (y) correspondant à la distance qu'il aura à parcourir entre les deux manoeuvres. Le dispositif de synthèse vocale l'informe donc qu'il doit tourner dans x mètres à gauche mais qu'ensuite il aura également à tourner à droite.

Dans un deuxième temps (matérialisé par un triangle hachuré référencé 2), dès que le véhicule a dépassé l'intersection avec la route B, le guidage normal et le guidage renforcé du véhicule indiquent qu'il doit tourner à droite dans y mètres (figure 3c).

Les deux exemples (figures 2a, 2b et 3a à 3c) d'anomalies présentés ci-dessus n'ont été indiqués qu'à titre d'information. Bien d'autres possibilités d'anomalies existent. Ces exemples n'ont été donnés que pour montrer l'intérêt du passage en mode de guidage renforcé selon l'invention.

Le passage en guidage renforcé, selon l'invention, permet donc de guider le conducteur de manière appropriée, notamment lorsqu'une rue nouvelle a été implantée, lorsqu'un sens interdit a été supprimé, lorsqu'une route principale présentant un certain nombre de virages croise des routes secondaires (cartographiées ou non). Ainsi, dès qu'un trajet comporte un certain nombre d'ambiguïtés, le conducteur est à même de demander des informations complémentaires concernant chacune de ces ambiguïtés.

Le guidage renforcé, selon l'invention, annonce et affiche, de manière temporaire et simplifiée, la topographie telle que mémorisée de la zone où l'ambiguïté est présente. En fait, le guidage renforcé, selon la présente invention, modifie le filtrage habituellement utilisé en mode de guidage normal, et présente au conducteur toutes les informations nécessaires à sa disposition. C'est le conducteur qui lève alors seul l'ambiguïté en reconnaissant les lieux et en utilisant les indications du guidage renforcé. Ces indications restent cependant succinctes et ne demandent pas une analyse soutenue de la part du conducteur pour interpréter une carte. Contrairement à ce qui est fait jusqu'à présent dans le cas des systèmes de navigation automobile, ce n'est donc plus une carte complète qui est présentée au conducteur pour lever une ambiguïté. Le conducteur peut ainsi analyser, plus rapidement et plus facilement, les manoeuvres à reproduire, dans la majorité des cas d'ailleurs, le seul message de guidage vocal est suffisant. Le conducteur n'a donc même pas à consulter l'écran d'affichage. Selon une variante de réalisation de la présente invention, le dispositif d'aide à la navigation utilise uniquement un dispositif de guidage vocal 15.

On notera que seul un tronçon du parcours en avant du véhicule est analysé. La distance ainsi analysée est compatible avec la possibilité du conducteur de détecter visuellement une ambiguïté, et dépend donc de la vitesse de déplacement du véhicule, mais aussi de la classe de voie parcourue.

La présente invention concerne également un procédé de navigation consistant à afficher sur un écran 14 des pictogrammes indiquant les manoeuvres significatives devant être reproduites par le conducteur et / ou à donner à l'aide d'un dispositif de guidage vocale 15 les indications correspondantes, en respectant un premier filtrage dit «guidage normal », le dit procédé étant caractérisé en ce qu'il consiste en outre lorsqu'une ambiguïté est détectée à :
- modifier le premier filtrage, de manière temporaire, pour passer en un mode de «guidage renforcé », dans lequel les informations nécessaires contenues dans la topographie mémorisée sont délivrées au conducteur selon un second filtrage.

On notera que la modification du premier filtrage consiste à réduire temporairement le degré de filtrage appliqué aux données topographiques telles que mémorisées. Ainsi, le second filtrage filtre moins les informations routières que le premier. Il permet de transmettre au conducteur des informations «brutes », pour lesquelles par exemple on ne tient pas compte du fait qu'une route est principale et on indique tout changement de direction mémorisé. Dans ce second mode de filtrage (qui peut, à l'extrême, être une absence de filtrage) tout croisement avec une route de même importance ou de moindre importance est signalé etc...

Ce second mode de filtrage n'est pas destiné à résoudre à lui seul une ambiguïté détectée, mais apporte au conducteur toutes les informations disponibles concernant cette ambiguïté, de manière à permettre au conducteur de la lever.

Bien entendu, la présente invention n'est pas limitée aux modes de réalisation ci-dessus décrits. On notera notamment que l'organe de commande adapté pour faire fonctionner le système de navigation, selon un mode de guidage temporaire renforcé, peut être un bouton-poussoir 16 comme précédemment décrit, ou bien un organe commandé par commande vocale. De même, le guidage renforcé peut de lui-même, lorsque l'ambiguïté a disparu, repasser en guidage normal ou bien effectuer ce passage en guidage normal après un laps de temps déterminé.

C'est l'unité centrale de calcul 11 qui compare, après actionnement par le conducteur de l'organe de commande 16, les indications données par le guidage normal et les indications que pourrait donner le guidage renforcé. Lorsqu'il existe une différence entre l'indication donnée par le guidage normal et la topographie mémorisée du lieu selon le guidage renforcé, alors l'unité centrale de calcul 11 autorise le passage en guidage renforcé. Par contre, dès que l'unité centrale de calcul 11 ne perçoit plus de différence entre le guidage normal et le guidage renforcé, elle provoque le passage du système de navigation 14 en guidage normal. Ce passage en mode de guidage normal peut également être différé pendant un certain laps de temps même s'il n'existe pas de différences entre le guidage normal et le guidage renforcé.

## Revendications

1. Système de navigation automobile (10), du type comportant :
- une unité centrale de calcul (11) de navigation munie d'une mémoire (12) contenant la topographie réelle d'une zone déterminée, et
- un dispositif de positionnement (13) du véhicule,
l'unité centrale (11) étant associée à un dispositif de guidage vocal (15) et/ou à un écran (14) fonctionnant selon un mode appelé de «guidage normal», dans lequel au moins un pictogramme de direction est affiché sur l'écran pour indiquer les manoeuvres significatives devant être prochainement reproduites par le conducteur, le dit système étant **caractérisé en ce qu'**il comporte en outre :
- un organe de commande (16) adapté pour faire fonctionner le dispositif de guidage vocal (15) et/ou l'écran (14) selon un mode de guidage temporairement renforcé, dans lequel au moins un message vocal et/ou un pictogramme de direction reproduit la topographie, telle que mémorisée, du lieu pour lequel un guidage renforcé a été demandé, le dit pictogramme de guidage renforcé et/ou le message vocal associé étant obtenu par une modification temporaire du filtrage appliqué aux données topographiques mémorisées.

2. Système de navigation (10) selon la revendication 1, **caractérisé en ce qu'**après action sur l'organe de commande (16), l'unité centrale de calcul (11) autorise le passage en guidage renforcé s'il existe une différence entre la direction indiquée par le mode de guidage normal et la topographie mémorisée de ce lieu.

3. Système de navigation (10) selon la revendication 1 ou 2, **caractérisé en ce que** lorsque le véhicule a dépassé l'endroit pour lequel un guidage renforcé a été demandé, l'unité centrale de calcul (11) commande le passage du système de navigation (10) en guidage normal.

4. Système de navigation (10) selon la revendication 1 ou 2, **caractérisé en ce que** l'organe de commande (16) est associé à une temporisation et **en ce que** lorsqu'un laps de temps déterminé s'est écoulé depuis le passage en mode de guidage renforcé, l'unité centrale (11) provoque le passage en mode de guidage normal.

5. Système de navigation (10) selon l'une quelconque des revendications précédentes, **caractérisé en ce que** l'organe de commande (16) est un bouton-poussoir placé à proximité du volant de conduite.

6. Système de navigation (10) selon l'une quelconque des revendications 1 à 4, **caractérisé en ce que** l'organe de commande (16) est un dispositif à commande vocale (15).

7. Procédé de navigation mettant en oeuvre le dispositif (10) selon l'une quelconque des revendications précédentes, le dit procédé consistant à afficher sur un écran (14) des pictogrammes indiquant les manoeuvres significatives devant prochainement être reproduites par le conducteur et / ou à donner à l'aide d'un dispositif de guidage vocal (15), les indications de guidage correspondantes, en respectant un premier filtrage dit «guidage normal », le dit procédé étant **caractérisé en ce qu'**il consiste en outre lorsqu'une ambiguïté est détectée par le conducteur à :
- modifier le premier filtrage, de manière temporaire, pour passer en un mode de «guidage renforcé », dans lequel les informations nécessaires contenues dans la topographie mémorisée sont délivrées au conducteur selon un second filtrage.

8. Procédé selon la revendication 7, **caractérisé en ce que** la modification du premier filtrage consiste au moins à réduire le degré de filtrage.

## Claims

1. Car navigation system (10) of the type comprising:
- a central computer unit (11) with a memory (12) containing the actual topography of a specified area, and
- a vehicle positioning device (13),
the central unit (11) being linked to a voice guidance device (15) and/or a screen (14) operating according to a mode referred to as "standard guidance", in which at least one direction pictogram is displayed on screen to indicate the significant manoeuvres which then have to be reproduced by the driver, said system being **characterised in that** it also comprises:
- a control device (16) used to operate the voice guidance device (15) and/or the screen (14) in a temporarily boosted guidance mode, in which at least one voice message and/or direction pictogram reproduces the topography, as memorised, of the location for which boosted guidance mode was called up, said boosted guidance pictogram and/or linked voice message being obtained by a temporary modification of the filter system applied to the memorised topographical data.

2. Navigation system (10) according to Claim 1, **characterised in that** after activation of the control device (16), the central computer unit (11) authorises the switch to boosted guidance mode, if there is a difference between the direction indicated by standard guidance mode and the memorised topography of this location.

3. Navigation system (10) according to Claim 1 or 2, **characterised in that**, once the vehicle has passed the location for which boosted guidance mode was called up, the central computer unit (11) instructs that the navigation system (10) is switched to standard guidance mode.

4. Navigation system (10) according to Claim 1 or 2, **characterised in that** the control device (16) is linked to a time delay and **in that** once a specified length of time has elapsed after the switch to boosted guidance mode, the central unit (11) triggers the switch to standard guidance.

5. Navigation system (10) according to one of the preceding claims, **characterised in that** the control device (16) is a push button located near to the steering wheel.

6. Navigation system (10) according to one of Claims 1 to 4, **characterised in that** the control device (16) is a voice controlled control device (15).

7. Navigation method using the device (10) according to one of the preceding Claims, said method consisting of displaying on screen (14) pictograms showing the significant manoeuvres which then have to be reproduced by the driver, and/or using a voice guidance device (15) to give corresponding guidance instructions, on the basis of a first filter system referred to as "standard guidance", said method being **characterised in that**, when an ambiguity is detected by the driver, it also consists of:
- modifying the first filter system, on a temporary basis, to switch to "boosted guidance" mode, in which the necessary data in the memorised topography is delivered to the driver on the basis of a second filter system.

8. Method according to Claim 7, **characterised in that** the modification of the first filter system consists in at least reducing the degree of filtering.

## Patentansprüche

1. Navigationsanlage (10) für ein Kraftfahrzeug mit:
- einer zentralen Navigations-Rechnereinheit (11) mit einem Speicher (12), der die tatsächliche Topographie eines vorgegebenen Bereichs enthält, und
- einer Positionsbestimmungsvorrichtung (13) für das Fahrzeug,
wobei die zentrale Rechnereinheit (11) einer akustischen und/oder mit einem Bildschirm (14) ausgerüsteten Führungsvorrichtung (15) zugeordnet ist, die in einem als normale Führung bezeichneten Betriebsmodus arbeitet, in dem mindestens ein Richtungspiktogramm auf dem Bildschirm dargestellt ist, um die von dem Fahrer als nächstes durchzuführenden wesentlichen Fahrmanöver anzuzeigen, wobei die Anlage **dadurch gekennzeichnet ist, dass** sie ferner aufweist:
- ein Betätigungsglied (16), das dazu dient, die akustische und/oder mit einem Bildschirm (14) ausgerüstete Führungsvorrichtung (15) in einem Betriebsmodus einer zeitweise übersteuerten Führung zu betreiben, in dem mindestens eine akustische Botschaft und/oder ein Richtungspiktogramm die als solche gespeicherte Topographie des Ortes reproduziert, für den eine übersteuerte Führung verlangt wurde, wobei das Piktogramm der übersteuerten Führung und/oder die zugehörige akustische Botschaft durch eine zeitweise Modifizierung der Filtrierung der gespeicherten topographischen Daten erzeugt wird.

2. Navigationsanlage (10) nach Anspruch 1, **dadurch gekennzeichnet, dass** nach Betätigung des Betätigungsgliedes (16) die zentrale Rechnereinheit (11) die Fahrt entsprechend der übersteuerten Führung autorisiert, wenn ein Unterschied zwischen der im Betriebsmodus der normalen Führung angezeigten Richtung und der gespeicherten Topographie dieses Ortes vorhanden ist.

3. Navigationsanlage (10) nach Anspruch 1 oder 2, **dadurch gekennzeichnet, dass**, wenn das Fahrzeug die Stelle, für die eine übersteuerte Führung angefordert wurde, passiert hat, die zentrale Rechnereinheit (11) die Navigationsanlage (10) im Betriebsmodus der normalen Führung betreibt.

4. Navigationsanlage (10) nach Anspruch 1 oder 2, **dadurch gekennzeichnet, dass** das Betätigungsglied (16) einer Zeitsteuerung zugeordnet ist und dass die zentrale Steuereinheit (11), wenn eine vorgegebene Zeitspanne seit dem Übergang in den Betriebsmodus der übersteuerten Führung verstrichen ist, den Übergang in den Betriebmodus der normalen Führung bewirkt.

5. Navigationsanlage (10) nach einem der vorhergehenden Ansprüche, **dadurch gekennzeichnet, dass** das Betätigungsglied (16) eine Drucktaste ist, die in der Nähe des Lenkrades angeordnet ist.

6. Navigationsanlage (10) nach einem der Ansprüche 1 bis 4, **dadurch gekennzeichnet, dass** das Betätigungsglied (16) eine akustische Betätigungsvorrichtung (15) ist.

7. Navigationsverfahren zum Betreiben der Vorrichtung (10) nach einem der vorhergehenden Ansprüche, bei welchem Verfahren auf einem Bildschirm (14) Piktogramme, die die von dem Fahrer als nächstes durchzuführenden wesentlichen Fahrmanöver anzeigen, dargestellt werden und/oder mit Hilfe einer akustischen Führungsvorrichtung (15) die entsprechenden Führungsanzeigen gegeben werden, indem eine als normale Führung bezeichnete erste Filtrierung beibehalten wird, wobei dieses Verfahren **dadurch gekennzeichnet ist, dass** ferner, wenn eine Ambiguität vom Fahrer festgestellt wird:
- die erste Filtrierung zeitweise so modifiziert wird, dass in einen Betriebsmodus einer übersteuerten Führung übergegangen wird, in der die in der gespeicherten Topographie enthaltenden erforderlichen Informationen dem Fahrer entsprechend einer zweiten Filtrierung übermittelt werden.

8. Verfahren nach Anspruch 7, **dadurch gekennzeichnet, dass** die Modifizierung der ersten Filtrierung mindestens aus einer Reduzierung des Filtrierungsgrades besteht.
